# FASCICULE DE BREVET EUROPEEN

(11) **EP 2 920 008 B1**
(45) Date de publication et mention de la délivrance du brevet: **17.08.2016**
(21) Numéro de dépôt: 13789349.1
(22) Date de dépôt: 12.11.2013
(51) Int. Cl.: B60C 11/01, B60C 11/03, B60C 11/24

(54) **INDICATEUR D'USURE POUR PNEU DE GÉNIE CIVIL**
VERSCHLEISSANZEIGE FÜR EIN REIFEN DES BAUWESENS
WEAR INDICATOR FOR A CIVIL ENGINEERING TIRE

(30) Priorité: 19.11.2012 FR 1260990
(43) Date de publication de la demande: 23.09.2015
(73) Titulaire: Compagnie Générale des Etablissements Michelin, 63000 Clermont-Ferrand (FR); Michelin Recherche et Technique S.A., 1763 Granges-Paccot (CH)
(72) Inventeur: GIRARD, Dominique, F-63040 Clermont-Ferrand Cedex 9 (FR); FERLIN, Olivier, F-63040 Clermont-Ferrand Cedex 9 (FR)
(74) Mandataire: Diernaz, Christian
(86) Numéro de dépôt international: PCT/EP2013/073662
(87) Numéro de publication internationale: WO 2014/076101

(56) Documents cités:
- EP-A2- 1 679 204
- GB-A- 2 276 130
- GB-A- 2 312 654
- GB-A- 2 376 002
- US-B1- 6 807 995

## Description

### DOMAINE DE L'INVENTION

La présente invention concerne les pneus pour engins de génie civil et plus particulièrement les pneus ayant des bandes de roulement ayant des épaisseurs élevées (*« extra deep tread »* en anglais) et destinées à équiper des engins employés dans des mines souterraines.

### ÉTAT DE LA TECHNIQUE

Les engins de travaux utilisés dans des mines souterraines, obscures par nature, sont équipés de pneus dont les bandes de roulement sont dépourvues de toute sculpture. Ces pneus roulent sur des voies particulièrement agressives et présentent une usure de leurs bandes qu'il est impératif de pouvoir contrôler pour éviter tout incident qui nécessiterait une intervention difficile générant un arrêt d'exploitation.

Les pneus dont il est fait état ici comprennent des bandes de roulement ayant de très fortes épaisseurs de matière à user; par très fortes épaisseurs, il faut ici entendre au une épaisseur au moins égale à 70 mm et pouvant aller jusqu'à 130 mm voire même davantage.

L'usage a consacré la présence d'au moins une entaille transversale dans ces bandes afin de permettre un suivi de l'usure de la bande. Ces entailles transversales sont formées lors du moulage du pneu et s'ouvrent à la fois sur la surface de roulement de la bande de roulement et sur l'une des faces latérales de cette bande.

Ce dispositif de suivi de l'usure permet d'effectuer visuellement une évaluation de la profondeur de l'entaille restante, mais ceci n'est qu'une évaluation indicative de l'épaisseur restante. Ce même dispositif de suivi de l'usure n'est pas totalement satisfaisant car il est nécessaire pour connaître l'épaisseur restante de faire une mesure de la profondeur restante de l'entaille avec un appareil approprié.

Par ailleurs, chaque entaille s'ouvrant sur la surface de roulement à l'état neuf est un point d'entrée possible pour les corps étrangers qui peuvent se trouver sur les voies de roulement dans les mines. Ces corps étrangers peuvent alors blesser le pneu voire même favoriser des arrachements de matière et alors perturber la lecture de la profondeur restante de matière à user.

Il est par ailleurs connu, voir notamment les documents GB-2312654-A, GB 2276130 A, EP 1679204 A2, GB 2312654 A, GB 2376002, de former une bande de roulement en superposant deux couches de couleurs différentes, l'apparition de la seconde couche indiquant un niveau d'usure prédéterminé. Le document US 6807995 B1 décrit un pneu comportant sur un de ses flancs un dispositif améliorant la visibilité du pneu la nuit.

### Définitions :

Plan médian équatorial : c'est un plan perpendiculaire à l'axe de rotation et passant par les points du pneu radialement les plus éloignés dudit axe.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

L'épaisseur totale E d'une bande de roulement est mesurée, sur le plan équatorial du pneu pourvu de cette bande, entre la surface de roulement à l'état neuf et la partie radialement la plus à l'extérieur de l'armature de sommet à l'état neuf.

Les conditions usuelles de roulage du pneu ou conditions d'utilisation sont celles qui sont définies par la norme E.T.R.T.O. ou par la norme T.R.A. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSÉ DE L'INVENTION

L'objet de l'invention vise à proposer un indicateur d'usure pour pneus pour engins de génie civil, ces pneus ayant des bandes de roulement d'épaisseurs élevées, cet indicateur d'usure permettant une lecture aisée sur le site même d'utilisation et notamment dans les conditions d'obscurité ou de semi obscurité rencontrées dans les mines souterraines.

À cet effet, l'invention a pour objet un pneu pour engin de génie civil comprenant une bande de roulement de forte épaisseur E correspondant à l'épaisseur de matière pouvant être usée en utilisation, cette bande comportant, à l'état neuf, une surface de roulement lisse (c'est-à-dire dépourvue de tout creux) destinée à venir en contact en roulage avec le sol, cette bande étant limitée axialement par des faces latérales, ces faces latérales étant prolongées radialement par des flancs du pneu, cette bande étant pourvue d'un dispositif indicateur de l'usure de ladite bande.

Ce pneu est caractérisé en ce que le dispositif indicateur comprend en combinaison une pluralité de rainures formées sur l'une au moins des faces latérales de la bande et pour chaque rainure un indice visuel indiquant un niveau d'usure correspondant au pourcentage de l'épaisseur initiale restant à user.

L'indice visuel peut être notamment du type : 75, 50, 25, correspondant aux pourcentages restant de matière à user, respectivement 75%, 50%, 25% de l'épaisseur E.

De façon avantageuse, le dispositif d'indication du niveau d'usure comprend une pluralité de rainures orientées circonférentiellement, ces rainures étant disposées selon des cercles concentriques et centrés sur l'axe de rotation.

Préférentiellement, chaque rainure est continue circonférentiellement pour faire un tour complet du pneu afin d'être plus aisément repéré par un observateur ayant à contrôler l'épaisseur restant à user.

Encore plus préférentiellement, la profondeur de chaque rainure est liée à sa position par rapport à la surface de roulement de la bande à l'état neuf, cette profondeur pouvant diminuer quand la distance par rapport à la surface de roulement à l'état neuf augmente.

De façon avantageuse, chaque rainure comprenant des parois latérales et un fond de rainure reliant entre elles les parois latérales, au moins ce fond de rainure est revêtu d'une matière colorée apte à réfléchir la lumière.

Ce dispositif de suivi de l'usure peut être réalisé sur une seule partie latérale d'une bande de roulement ou sur les deux parties latérales.

Dans une autre variante intéressante, au moins le fond de chaque rainure est revêtu d'une couleur qui est propre à ladite rainure. Cette disposition permet une visualisation et une interprétation améliorée du niveau d'usure et ceci dans un lieu particulièrement obscur comme peut l'être une mine souterraine. Par ailleurs, l'indice de chaque rainure peut également être revêtu d'une couleur identique à celle de la rainure qu'il caractérise.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue en plan d'un flanc de pneu de génie civil pourvu d'une pluralité de rainures d'orientation circonférentielle, ces rainures étant continues;

La figure 2 représente une vue en coupe d'une partie de la bande de roulement du pneu montré avec la figure 1 ;

La figure 3 montre une autre variante d'un flanc de pneu de génie civil selon l'invention, cette variante comportant une pluralité de rainures d'orientation circonférentielle discontinues.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

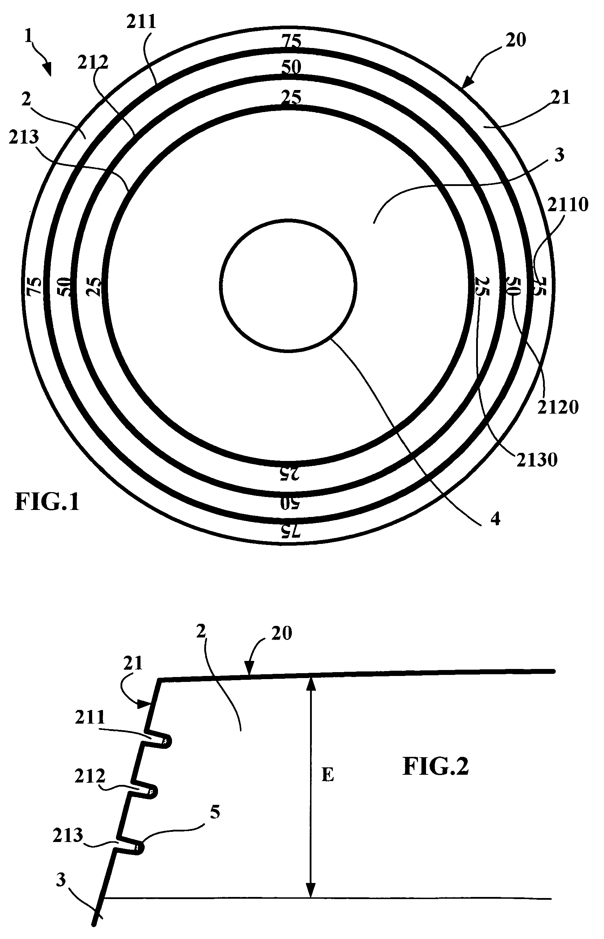

La figure 1 représente une vue en plan d'un côté d'un pneu de génie civil, ce pneu étant pourvu d'une bande de roulement comportant un dispositif indicateur d'usure, ce dispositif étant constitué d'une pluralité de rainures d'orientation circonférentielle, ces rainures étant continues.

Le pneu 1 représenté est un pneu de dimension 26.5 R 25. Il est pourvu d'une bande de roulement 2 d'épaisseur initiale E égale à 124 mm et de largeur égale à 682 mm. Cette bande 2 comprend à l'état neuf une surface de roulement 20 destinée à venir en contact avec le sol en roulage ; cette surface de roulement 20 se prolonge de part et d'autre par des faces latérales 21, ces dernières étant elles-mêmes prolongées par les flancs 3 du pneu. Ces flancs 3 se terminent par des bourrelets 4 destinés à être en contact avec une jante de montage. La bande de roulement est entièrement dépourvue de rainures s'ouvrant sur sa surface de roulement 20 et la totalité de la matière est donc disponible pour être usée en utilisation.

Sur une des faces latérales 21 de la bande de roulement 2, on a formé un dispositif indicateur de l'usure de la bande. Ce dispositif comprend une série de trois rainures 211, 212, 213 continues circonférentiellement, ces rainures 211, 212, 213 étant concentriques et centrées sur l'axe de rotation du pneu. Dans l'exemple montré, à chaque rainure 211, 212, 213 est associé un indice visuel 2110, 2120, 2130 respectivement, chaque indice visuel indiquant l'épaisseur restant à user. Par exemple, la rainure 211 la plus à l'extérieur radialement est combinée avec un indice visuel « 75 » indiquant par là qu'une fois que l'usure de la bande a atteint cette rainure, il reste à user une épaisseur égale à 75% de l'épaisseur initiale E. La profondeur de chaque rainure est ici égale à 10 mm

L'indice visuel afférent à une rainure est bien entendu formé en différentes positions le long de cette rainure afin de faciliter sa lecture le moment venu.

Dans cet exemple, et pour renforcer la visibilité et l'interprétation de l'épaisseur restante à user, chaque rainure comprenant des parois latérales et un fond de rainure reliant entre elles lesdites parois latérales, le fond de chaque rainure a été recouvert d'une peinture 5 de couleur spécifique à chaque rainure et pouvant réfléchir la lumière. De cette manière, la lecture dans les conditions particulièrement défavorables qui sont celles rencontrées dans les mines souterraines s'en trouve facilitée puisque la lumière incidente provenant d'une lampe frontale est fortement réfléchie par la peinture sur fond de la rainure. De manière similaire cette peinture peut être disposée sur le fond et sur les parois des rainures.

La figure 2 représente une vue en coupe d'une partie latérale de la bande de roulement 2 et d'un flanc 3 du pneu 1 montré avec la figure 1.

On voit sur cette figure 2 les trois rainures 211, 212, 213 dont les fonds de rainure sont revêtus d'une peinture 5 disposée après le moulage du pneu, cette peinture étant auto réfléchissante dans des conditions de quasi-totale obscurité voire de totale obscurité. Les rainures sont moulées pour être sensiblement perpendiculaires à la surface latérale 21 de la bande de roulement. Dans une variante non montrée, on peut les mouler de façon à ce qu'elles soient parallèles à l'axe de rotation.

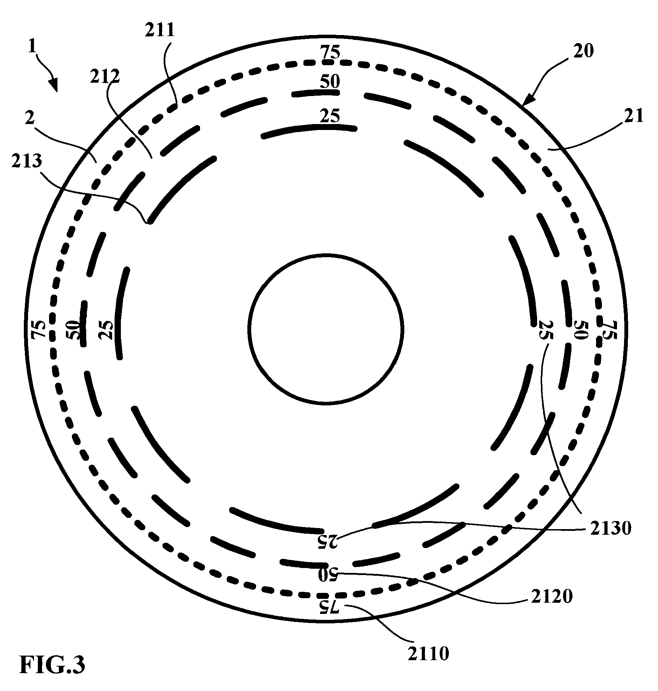

La figure 3 montre une autre variante de pneu de génie civil selon l'invention, cette variante comportant sur une face latérale 21 de la bande de roulement 2 une pluralité de rainures 211, 212, 213 d'orientation circonférentielle discontinues. Chaque niveau d'usure correspondant à un indice visuel 2110, 2120, 2130 indiquant l'épaisseur restant à user comprend une succession d'une pluralité de petites rainures.

Cette variante est intéressante en ce que la bande de roulement 2 est peu affaiblie puisque la quantité de matière absente (liée à chaque rainure) est limitée comparativement à l'exemple montré avec les figures 1 et 2.

Selon cette variante, le nombre de rainures par niveau d'usure (correspondant à chaque indice visuel) décroit avec l'épaisseur restant à user. Dans une autre variante, ce nombre pourrait croître avec l'épaisseur restant à user.

Bien sûr, il serait possible de combiner cette variante avec la présence d'un revêtement coloré pouvant être auto réfléchissant afin de favoriser sa lecture le moment venu. Il serait également avantageux de prévoir que les indices visuels 2110, 2120, 2130 présentent chacun une couleur en rapport avec la pluralité de rainures qu'il accompagne.

L'invention ayant été décrite avec ces deux variantes, il doit être compris que celle-ci n'est pas limitée à ces variantes et diverses modifications peuvent y être apportées sans sortir du cadre défini par les revendications. Notamment un dispositif indicateur d'usure selon l'invention peut être prévu sur chaque partie latérale d'une bande de roulement.

## Revendications

1. Pneu (1) pour engin de génie civil comprenant une bande de roulement (2) de forte épaisseur initiale E, cette épaisseur correspondant à l'épaisseur de matière pouvant être usée en utilisation, cette bande de roulement (2) comportant une surface de roulement (20) lisse, c'est-à-dire dépourvue de tout creux, destinée à venir en contact avec le sol lors d'un roulage, cette bande de roulement (2) étant limitée axialement par des faces latérales (21), ces faces latérales étant prolongées radialement sur le pneu par des flancs (3), cette bande de roulement (2) étant pourvue d'un dispositif indicateur d'usure pour indiquer visuellement un niveau d'usure de ladite bande, ce pneu (1) étant **caractérisé en ce que** le dispositif indicateur d'usure comprend en combinaison une pluralité de rainures (211, 212, 213) formées sur l'une au moins des faces latérales (21) de la bande de roulement et pour chaque rainure un indice visuel (2110, 2120, 2130) indiquant un niveau d'usure correspondant au pourcentage de l'épaisseur initiale E restant à user.

2. Pneu (1) selon la revendication 1 **caractérisé en ce que** le dispositif indicateur d'usure de la bande de roulement comprend une pluralité de rainures (211, 212, 213) orientées circonférentiellement, ces rainures (211, 212, 213) étant disposées selon des cercles concentriques et centrés sur l'axe de rotation.

3. Pneu (1) selon la revendication 1 ou la revendication 2 **caractérisé en ce que** chaque rainure (211, 212, 213) est continue circonférentiellement pour faire un tour complet du pneu.

4. Pneu (1) selon l'une des revendications 1 à 3 **caractérisé en ce que** la profondeur de chaque rainure (211, 212, 213) est liée à sa position par rapport à la surface de roulement (20) de la bande de roulement à l'état neuf, ces profondeurs diminuant quand la distance par rapport à cette surface augmente.

5. Pneu (1) selon l'une des revendications 1 à 4 **caractérisé en ce que** chaque rainure (211, 212, 213) comprend un fond de rainure (5), ce fond de rainure étant revêtu d'une matière colorée réfléchissant la lumière.

6. Pneu (1) selon la revendication 5 **caractérisé en ce que** chaque rainure (211, 212, 213) est revêtue d'une couleur qui lui est propre.

7. Pneu (1) selon l'une des revendications 1 à 6 **caractérisé en ce que** chaque indice visuel (2110, 2120, 2130) est revêtu d'une couleur qui lui est propre, cette couleur étant liée au niveau d'usure.

## Patentansprüche

1. Reifen (1) für Baumaschine, umfassend einen Laufstreifen (2) mit großer anfänglicher Dicke E, wobei diese Dicke der Materialdicke, die bei der Nutzung verschlissen werden kann, entspricht, wobei dieser Laufstreifen (2) eine glatte Lauffläche (20), das heißt ohne jegliche Vertiefung, die dazu bestimmt ist, bei einer Fahrt mit dem Boden in Kontakt zu kommen, aufweist, wobei dieser Laufstreifen (2) axial durch seitliche Flächen (21) begrenzt ist, wobei diese seitlichen Flächen am Reifen radial durch Flanken (3) verlängert sind, wobei dieser Laufstreifen (2) mit einer Verschleißanzeigevorrichtung versehen ist, um ein Verschleißniveau des Streifens visuell anzuzeigen, **dadurch gekennzeichnet, dass** die Verschleißanzeigevorrichtung in Kombination eine Mehrzahl von Rillen (211, 212, 213), die an mindestens einer der seitlichen Flächen (21) des Laufstreifens ausgebildet sind, und für jede Rille einen visuellen Index (2110, 2120, 2130), der ein Verschleißniveau anzeigt, das dem Prozentsatz der für den Verschleiß verbleibenden anfänglichen Dicke E entspricht, umfasst.

2. Reifen (1) nach Anspruch 1, **dadurch gekennzeichnet, dass** die Verschleißanzeigevorrichtung des Laufstreifens eine Mehrzahl von in Umfangsrichtung ausgerichteten Rillen (211, 212, 213) umfasst, wobei diese Rillen (211, 212, 213) nach auf die Rotationsachse zentrierten, konzentrischen Kreisen angeordnet sind.

3. Reifen (1) nach Anspruch 1 oder Anspruch 2, **dadurch gekennzeichnet, dass** jede Rille (211, 212, 213) in Umfangsrichtung durchgehend ist, um eine vollständige Umdrehung um den Reifen zu beschreiben.

4. Reifen (1) nach einem der Ansprüche 1 bis 3, **dadurch gekennzeichnet, dass** die Tiefe jeder Rille (211, 212, 213) mit ihrer Position bezogen auf die Lauffläche (20) des Laufstreifens im neuen Zustand verknüpft ist, wobei diese Tiefen abnehmen, wenn der Abstand bezogen auf diese Fläche zunimmt.

5. Reifen (1) nach einem der Ansprüche 1 bis 4, **dadurch gekennzeichnet, dass** jede Rille (211, 212, 213) einen Rillenboden (5) umfasst, wobei dieser Rillenboden mit einem Licht reflektierenden, farbigen Material versehen ist.

6. Reifen (1) nach Anspruch 5, **dadurch gekennzeichnet, dass** jede Rille (211, 212, 213) mit einer eigenen Farbe versehen ist.

7. Reifen (1) nach einem der Ansprüche 1 bis 6, **dadurch gekennzeichnet, dass** jeder visuelle Index (2110, 2120, 2130) mit einer eigenen Farbe versehen ist, wobei diese Farbe mit dem Verschleißniveau verknüpft ist.

## Claims

1. Tyre (1) for a civil engineering vehicle comprising a tread (2) of high initial thickness E, this thickness corresponding to the thickness of material which can be worn during use, this tread (2) comprising a smooth rolling surface (20), i.e. without any recesses, intended to come into contact with the ground during rolling, this tread (2) being limited axially by lateral faces (21), these lateral faces being extended radially on the tyre by sidewalls (3), this tread (2) being provided with a wear indicator device to visually indicate a wear level of the said tread, this tyre (1) being **characterized in that** the wear indicator device comprises, in combination, a plurality of grooves (211, 212, 213) formed on at least one of the lateral faces (21) of the tread and, for each groove, a visual index (2110, 2120, 2130) indicating a wear level corresponding to the percentage of the initial thickness E remaining to be worn.

2. Tyre (1) according to Claim 1, **characterized in that** the wear indicator device of the tread comprises a plurality of circumferentially oriented grooves (211, 212, 213), these grooves (211, 212, 213) being arranged along concentric circles and centred on the axis of rotation.

3. Tyre (1) according to Claim 1 or Claim 2, **characterized in that** each groove (211, 212, 213) is circumferentially continuous in order to make a complete turn around the tyre.

4. Tyre (1) according to one of Claims 1 to 3, **characterized in that** the depth of each groove (211, 212, 213) is associated with its position with respect to the rolling surface (20) of the tread in the new state, these depths decreasing when the distance with respect to this surface increases.

5. Tyre (1) according to one of Claims 1 to 4, **characterized in that** each groove (211, 212, 213) comprises a groove base (5), this groove base being coated with a light-reflecting coloured material.

6. Tyre (1) according to Claim 5, **characterized in that** each groove (211, 212, 213) is coated with a colour which is specific to it.

7. Tyre (1) according to one of Claims 1 to 6, **characterized in that** each visual index (2110, 2120, 2130) is coated with a colour which is specific to it, this colour being associated with the wear level.
